(19)

**Europäisches Patentamt**
**European Patent Office**
**Office européen des brevets**

(11) **EP 2 720 393 B1**

(12) **EUROPÄISCHE PATENTSCHRIFT**

(45) Veröffentlichungstag und Bekanntmachung des Hinweises auf die Patenterteilung:
**29.06.2016 Patentblatt 2016/26**

(51) Int Cl.:
**H04J 11/00** *(2006.01)*    **H04L 27/26** *(2006.01)*

(21) Anmeldenummer: **13187714.4**

(22) Anmeldetag: **08.10.2013**

(54) **AUSBLENDUNG IMPULSFÖRMIGER INTERFERENZEN IN EINEM OFDM SIGNAL**

REMOVAL OF PULSE-SHAPED INTERFERENCES IN AN OFDM SIGNAL

SUPPRESSION D'INTERFÉRENCES EN FORME D'IMPULSIONS DANS UN SIGNAL OFDM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2012 DE 102012109698**

(43) Veröffentlichungstag der Anmeldung:
**16.04.2014 Patentblatt 2014/16**

(73) Patentinhaber: **Deutsches Zentrum für Luft- und Raumfahrt e.V.**
**51147 Köln (DE)**

(72) Erfinder: **Epple, Ulrich**
**81249 München (DE)**

(74) Vertreter: **Rasch, Michael**
**Rösler - Rasch - van der Heide & Partner**
**Patent- und Rechtsanwälte PartG mbB**
**Bodenseestrasse 18**
**81241 München (DE)**

(56) Entgegenhaltungen:
- BRANDES S ET AL: "Compensation of the Impact of Interference Mitigation by Pulse Blanking in OFDM Systems", GLOBAL TELECOMMUNICATIONS CONFERENCE, 2009. GLOBECOM 2009. IEEE, IEEE, PISCATAWAY, NJ, USA, 30. November 2009 (2009-11-30), Seiten 1-6, XP031646222, ISBN: 978-1-4244-4148-8
- ZHIDKOV S V: "On the analysis of OFDM receiver with blanking nonlinearity in impulsive noise channels", INTELLIGENT SIGNAL PROCESSING AND COMMUNICATION SYSTEMS, 2004. ISPACS 2004. PROCEEDINGS OF 2004 INTERNATIONAL SYMPOSIUM ON SEOUL, KOREA NOV. 18-19, 2004, PISCATAWAY, NJ, USA,IEEE, 18. November 2004 (2004-11-18), Seiten 492-496, XP010806148, DOI: 10.1109/ISPACS.2004.1439104 ISBN: 978-0-7803-8639-6
- ULRICH EPPLE ET AL: "Investigation of Blanking Nonlinearity in OFDM Systems", ICC 2011 - 2011 IEEE INTERNATIONAL CONFERENCE ON COMMUNICATIONS - 5-9 JUNE 2011 - KYOTO, JAPAN, IEEE, PISCATAWAY, NJ, USA, 5. Juni 2011 (2011-06-05), Seiten 1-5, XP031908645, DOI: 10.1109/ICC.2011.5962893 ISBN: 978-1-61284-232-5
- CHI-HSIAO YIH: "Iterative Interference Cancellation for OFDM Signals With Blanking Nonlinearity in Impulsive Noise Channels", IEEE SIGNAL PROCESSING LETTERS, IEEE SERVICE CENTER, PISCATAWAY, NJ, US, Bd. 19, Nr. 3, 1. März 2012 (2012-03-01), Seiten 147-150, XP011398113, ISSN: 1070-9908, DOI: 10.1109/LSP.2012.2183636
- ULRICH EPPLE ET AL: "Adaptive threshold optimization for a blanking nonlinearity in OFDM receivers", GLOBAL COMMUNICATIONS CONFERENCE (GLOBECOM), 2012 IEEE, IEEE, 3. Dezember 2012 (2012-12-03), Seiten 3661-3666, XP032375242, DOI: 10.1109/GLOCOM.2012.6503685 ISBN: 978-1-4673-0920-2

EP 2 720 393 B1

## Beschreibung

Die Erfindung betrifft ein Verfahren und eine Vorrichtung zur Ausblendung einer impulsförmigen Interferenz bei einem von einem Empfänger empfangenen OFDM-Signal. Weiterhin betrifft die Erfindung einen L-Band-Empfänger mit einer ebensolchen Vorrichtung.

Bekanntermaßen kann in bestimmten Frequenzbereichen, in denen OFDM-Mehrträgersysteme (OFDM für engl. "orthogonal frequency-division multiplexing") betrieben werden, neben dem thermischen Rauschen auch eine impulsförmige Störung auftreten, die zwar zeitlich nur sehr kurz ist, aber aufgrund ihrer meist hohen Leistung die Leistungsfähigkeit des OFDM-Systems erheblich beeinträchtigen kann. Ein bekanntes Verfahren, um diesen Störeinfluss zu reduzieren, ist die Pulsausblendung (engl. "Pulse Blanking"). Die Pulsausblendung ist ein bekanntes Verfahren zur Reduzierung des Störeinflusses impulsförmiger Interferenz in OFDM basierten Mehrträgersystemen. Bei diesem Verfahren werden alle empfangenen Signalanteile der impulsförmigen Interferenz, deren Amplituden einen bestimmten Grenzwert übersteigen, ausgeblendet. Der Begriff der "Interferenz" wird vorliegend im Sinne einer Summe aus dem eigentlichen Nutzsignal, einem Rauschen und einem impulsartigen Störsignal verstanden.

Aus der US 4,479,251 A ist ein Verfahren zur Pulsausblendung bekannt, das einen vorgegebenen festen Grenzwert zur Pulsausblendung verwendet. Dem Artikel von S. V. Zhidkov: "Performance Analysis and Optimization of OFDM-Receiver With Blanking Nonlinearity in Impulsive Noise Environment", IEEE Transactions On Vehicular Technology, Vol. 55, No. 1, Januar 2006, kann entnommen werden, wie ein solcher fester Grenzwert zur Pulsausblendung berechnet werden kann. Diese Berechnung beruht auf statistischen Parametern, welche die impulsförmige Interferenz charakterisieren.

Aus der US 5 867 539 A ist ein Verfahren und eine Empfangsvorrichtung zum Erkennen und Ausblenden eines impulsartigen Störsignals bekannt. In einer Ausführungsform wird der Grenzwert des Pegels, ab welchem eine Impulsausblendung erfolgt, adaptiv eingestellt.

Die US 2011/0 158 360 A zeigt ebenfalls ein Verfahren zur Auslöschung eines impulsartigen Störsignals in einer Empfangsvorrichtung. Das Vorliegen einer impulsartigen Störung wird dabei aufgrund der Bewertung eines geschätzten SNR-Werts ermittelt.

Auch die US 2005/0 143 109 A1 betrifft eine Empfangsvorrichtung zum Erkennen und Auslöschen eines impulsartigen Störsignals. Ähnlich wie bei der US 5 867 539 A erfolgt hier eine adaptive Einstellung des Grenzwerts zur Impulsausblendung.

Die US 2010/ 0246 726 A1 ein weiteres Verfahren und eine Empfangsvorrichtung zum Erkennen und Auslöschen eines impulsartigen Störsignals. Der Grenzwert, ab welchem eine Impulsausblendung erfolgt, wird ebenfalls adaptiv eingestellt.

Weitere Informationen zur Impulsausblendung bei OFDM Signalen gehen zudem aus folgenden Artikeln hervor:

Brandes et al. "Compensation of the Impact of Interference Mitigation by Pulse Blanking in OFDM Systems", GLOBAL TELECOMMUNICATIONS in OFDM Systems, 2009. GLOBECOM 2009, IEEE Piscataway, NJ, USA, 30, November 2009, Seiten 1-6, XP031646222, ISBN:978-1-4244-4148-8.

ZH IOKOV S V: "On the analysis of OFOM receiver with blanking nonlinearity in impulsive noise channels", INTELLIGENT SIGNAL PROCESSING ANO COMMUNICATION SYSTEMS, 2004. ISPACS 2004. PROCEEOINGS OF 2004 INTERNATIONAL SYMPOSIUM ON SEOUL, KOREA NOV. 18-19,2004, PISCATAWAY, NJ, USA,IEEE, 18. November 2004 (2004-11-18), Seiten 492-496, XP01 0806148, DOI: 10.1109/ISPACS.2004.14391 04, ISBN: 978-0-7803-8639-6

ULRICH EPPLE ET AL: "Investigation of Blanking Nonlinearity in OFDM Systems", ICC 2011 - 2011 IEEE INTERNATIONAL CONFERENCE ON COMMUNICATIONS - 5-9 JUNE 2011 - KYOTO, JAPAN, IEEE, PISCATAWAY, NJ, USA, 5. Juni 2011 (2011-06-05), Seiten 1-5, XP031908645, 001: 10.11 09/ICC.2011.5962893 ISBN: 978-1-61284-232-5

CHI-HSIAO YIH: "Iterative Interference Cancellation for OFDM Signals With Blanking Nonlinearity in Impulsive Noise Channels", IEEE SIGNAL PROCESSING LETTERS, IEEE SERVICE CENTER, PISCATAWAY, NJ, US, Bd. 19, Nr. 3, 1. März 2012 (2012-03-01), Seiten 147-150, XP011398113, ISSN: 1070-9908, 001: 10.1109/LSP.2012.2183636

Die Pulsausblendung hat jedoch den Nachteil, dass nicht nur das Interferenzsignal, sondern auch das eigentliche OFDM-Nutzsignal stark beeinträchtig wird. Daher stellt die Wahl des Grenzwertes immer einen Kompromiss zwischen einer möglichst starken Auslöschung der Interferenz und einer möglichst geringen Beeinträchtigung des OFDM Signals dar. Ein unpassend gewählter Grenzwert kann die Leistungsfähigkeit der Pulsausblendung und somit des OFDM Systems deutlich reduzieren.

Aus dem vorstehend zitierten Artikel von Zhidkov geht weiterhin hervor, dass bei der Anwendung der Pulsausblendung für Übertragungen von OFDM basierten Mehrträgersignalen, immer ein optimaler Grenzwert existiert. Dieser hängt sowohl vom Signal-zu-Rauschverhältnis (SNR), als auch von der Leistung der impulsförmigen Interferenz und der Häufigkeit deren Auftretens ab. Da sich diese Parameter während einer Übertragung typischerweise ändern, kann ein fester, vor der Übertragung definierter Grenzwert nicht optimal sein und bedingt eine eingeschränkte Leistungsfähigkeit der Übertragung. Ein adaptiver, an die Interferenz angepasster Grenzwert wird daher stets zu einer verbesserten Leistungsfähigkeit führen. Die Berechnung des Grenzwerts, wie er von Zhidkov beschrieben wird, kann nicht adaptiv erfolgen, da dazu jeweils aktuelle Informationen über Leistung, und Häufigkeit des Auftretens der impulsförmigen Interferenz notwendig wären, die während einer Übertragung jedoch nicht bekannt sind. Den Grenzwert so zu wählen, dass die Bitfehlerhäufigkeit der Übertragung minimiert wird, wie dies in dem Artikel von K.S. Al-Mawali: "Adaptive-Threshold Blanking for Impulse Noise Reduction in OFDM-Based Power Line Communications", Proc. of the IASTED International Conference Signal and Image Processing (SIP 2009), Aug. 17-19 2009. Hawaii USA, beschrieben ist, ist ebenfalls nicht praktisch anwendbar, da hierzu die zu übertragenden Daten im Empfänger bekannt sein müssten.

Aus dem Stand der Technik ist bekannt, wie ein optimaler, fester (nicht adaptiver) Grenzwert theoretisch berechnet werden kann. Was fehlt, ist ein Verfahren, wie in der Praxis ein adaptiver Grenzwert anhand von Messungen der aktuellen Interferenzsituation bestimmt und zur Ausblendung impulsförmiger Interferenz eingesetzt werden kann.

Aufgabe der vorliegenden Erfindung ist es daher, ein verbessertes Verfahren zur Ausblendung impulsförmiger Interferenzen in einem OFDM Signal anzugeben.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster verfahrensgemäßer Aspekt der Aufgabe ist mit einem Verfahren zur Ausblendung einer impulsförmigen Interferenz bei einem von einem Empfänger empfangenen OFDM-Signal r gelöst. Das erfindungsgemäße Verfahren umfasst folgende Schritte. In einem ersten Schritt erfolgt ein Vorgeben eines Grenzwertes $T_n$ mit n = 1. Dieser erste Grenzwert $T_{n=1}$ ist bevorzugt Null ($T_{n=1} = 0$). Er kann natürlich je nach Anforderung auch anders gewählt werden. In einem zweiten Schritt erfolgt ein Ausblenden von Signalanteilen der impulsförmigen Interferenz des OFDM-Signals r, deren Signalamplituden größer als der Grenzwert $T_n$ sind, wobei nach dem Ausblenden der Signalanteile das Signal $y(r,T_n)$ vorliegt:

$$(1) \qquad y(r,T_n) = \begin{cases} r, & |r| \leq T_n \\ 0, & sonst \end{cases}$$

In einem dritten Schritt erfolgt ein Ermitteln einer Restinterferenzleistung $PL(y(r,T_n))$ des Signals $y(r,T_n)$. In einem vierten Schritt erfolgt ein Ermitteln einer Nutzsignalleistung $PS(y(r,T_n))$ des Signals $y(r,T_n)$. In einem fünften Schritt erfolgt ein Ermitteln einer Rauschleistung $PN(y(r,T_n))$ des Signals $y(r,T_n)$. In einem sechsten Schritt erfolgt ein Ermitteln eines Signal-zu-Interferenz-und-Rausch Verhältnisses $SINR(y(r,T_n))$:

$$(2) \qquad SINR(y(r,T_n)) = SINR(PL(y(r,T_n)), PS(y(r,T_n)), PN(y(r,T_n))) = SINR(T_n).$$

In einem siebten Schritt erfolgt ein Ermitteln eines optimierten Grenzwertes $T_m$ zur Ausblendung der impulsförmigen Interferenz des OFDM-Signals r durch mehrmaliges Ausführen der Schritte zwei bis sechs, wobei das Signal-zu-Interferenz-und-Rausch Verhältnis $SINR(T_n)$ durch iteratives Variieren des Grenzwertes $T_n$ für n = 2, 3,..., m, maximiert wird, so dass für $T_m$ gilt:

$$(3) \qquad SINR(y(r,T_m)) = SINR(T_m) = Max(SINR(y(r,T_n)) = Max(SINR(T_n)).$$

Die Schritte zwei bis sechs werden mit anderen Worten n=1,2,..., M mal durchgeführt und anschließend wird dasjenige m aus n gewählt, für das sich ein maximales $SINR(T_n)$ ergeben hat.

In einem achten Schritt erfolgt ein Ausblenden der impulsförmigen Interferenz des OFDM-Signals r, deren Signalamplituden größer als der Grenzwert $T_m$ sind, wobei nach dem Ausblenden das Signal $y(r,T_m)$ vorliegt:

$$(4) \qquad y(r,T_m) = \begin{cases} r, & |r| \leq T_m \\ 0, & sonst \end{cases}$$

Das erfindungsgemäße Verfahren basiert somit auf der Bestimmung eines adaptiven, an die impulsförmige Interferenz angepassten Grenzwerts $T_m$ zur Pulsausblendung. Die Bestimmung des Grenzwerts $T_m$ beruht dabei auf der Ermittlung (Schätzung) der verbleibenden Restinterferenzleistung $PL(y(r,T_n))$, der Nutzsignalleistung $PS(y(r,T_n))$, sowie der Rauschleistung $PN(y(r,T_n))$ in Abhängigkeit des Grenzwerts $T_n$ und des OFDM-Signals r, und einer iterativen Maximierung eines Signal-zu-Interferenz-und-Rausch Verhältnisses $SINR(y(r,T_n))$. Der Grenzwert $T_m$ ergibt sich, bevorzugt als globales Maximum, wobei gilt: $SINR(T_m) = Max(SINR(T_n))$. Das Signal $y(r,T_m)$ wird im Empfänger anschließend bevorzugt demoduliert und weiterverarbeitet.

Das erfindungsgemäße Verfahren ermöglicht gegenüber dem Stand der Technik insbesondere eine geringere Bitfehlerhäufigkeit und ist robust gegen Störungen.

In einer besonders bevorzugten Verfahrensvariante ist das Signal-zu-Interferenz-und-Rausch Verhältnis SINR = $SINR(y(r,T_n))$ wie folgt definiert:

$$(5) \qquad SINR = \frac{K^2 \cdot PS}{K^2 \cdot PN + K(1-K)(PS+PN) + PL}$$

mit

SINR:     Signal-zu-Interferenz-und-Rausch Verhältnis $SINR(y(r,T_n))$ des Signals $y(r,T_n)$,
PL:        Restinterferenzleistung $PL(y(r,T_n))$ des Signals $y(r,T_n)$,
PS:        Nutzsignalleistung $PS(r)$ des ODM-Signals r,
PN:       Rauschleistung $PN(r)$ des OFDM-Signals r, und
K:         Verhältnis der Summe aus der Nutzsignalleistung $PS(y(r,T_n))$ des Signals $y(r,T_n)$)

und der Rauschleistung $PN(y(r,T_n))$ des Signals $y(r,T_n)$) zur Summe aus der Nutzsignalleistung $PS(r)$ und der Rauschleistung $PN(r)$. Natürlich können auch dem Fachmann aus dem Stand der Technik bekannte andere Definitionen des SINR verwendet werden.

Das Verfahren wird bevorzugt für eine (beliebig) vorgegebene Anzahl von empfangenen OFDM-Symbolen automatisiert erneut ausgeführt.

Das erfindungsgemäße Verfahren wird weiterhin bevorzugt zur Ausblendung impulsförmiger Interferenzen bei der Funk-Kommunikation mit Luftfahrzeugen im L-Band verwendet.

Ein zweiter vorrichtungsgemäßer Aspekt der Aufgabe wird durch eine Vorrichtung zur Ausblendung einer impulsförmigen Interferenz bei einem von einem Empfänger empfangenen OFDM-Signal r gelöst. Die erfindungsgemäße Vorrichtung umfasst ein erstes Mittel, mit dem ein Grenzwert $T_n$ mit n = 1 vorgegeben wird, ein zweites Mittel, mit dem Signalanteile der impulsförmigen Interferenz des Signals r ausgeblendet werden, deren Signalamplituden größer als der Grenzwert $T_n$ sind, wobei nach dem Ausblenden der Signalanteile das Signal $y(r,T_n)$ vorliegt:

$$(1) \qquad y(r,T_n) = \begin{cases} r, & |r| \le T_n \\ 0, & sonst \end{cases}$$

ein drittes Mittel, mit dem eine Restinterferenzleistung $PL(y(r,T_n))$ des Signals $y(r,T_n)$ ermittelt wird, ein viertes Mittel, mit dem eine Nutzsignalleistung $PS(y(r,T_n))$ des Signals $y(r,T_n)$ ermittelt wird, ein fünftes Mittel, mit dem eine Rauschleistung $PN(y(r,T_n))$ des Signals $y(r,T_n)$ ermittelt wird, ein sechstes Mittel, mit dem ein Signal-zu-Interferenz-und-Rausch Verhältnis $SINR(y(r,T_n))$:

$$(2) \qquad SINR(y(r,T_n)) = SINR(\ PL(y(r,T_n)), PS(y(r,T_n)), PN(y(r,T_n))) = SINR(T_n)$$

ermittelt wird, ein siebtes Mittel, mit dem ein optimierter Grenzwert $T_m$ zur Ausblendung der impulsförmigen Interferenz des OFDM-Signals r ermittelt wird, wobei das Signal-zu-Interferenz-und-Rausch Verhältnis $SINR(T_n)$ durch iteratives Variieren des Grenzwertes $T_n$ für n = 2, 3, ..., m maximiert wird, so dass für $T_m$ gilt:

$$(3) \qquad SINR(y(r,T_m)) = SINR(T_m) = Max(SINR(y(r,T_n))) = Max(SINR(T_n)),\ und$$

ein achtes Mittel, mit dem die impulsförmige Interferenz des OFDM-Signals r, deren Signalamplituden größer als der Grenzwert $T_m$ sind ausgeblendet wird, wobei nach dem Ausblenden das Signal $y(r,T_m)$ vorliegt:

$$(4) \qquad y(r,T_m) = \begin{cases} r, & |r| \le T_m \\ 0, & sonst \end{cases}$$

Weitere bevorzugte Ausführungsformen oder Vorteile der Vorrichtung ergeben sich durch eine analoge und sinngemäße Übertragung der vorstehenden Ausführungen zu dem erfindungsgemäßen Verfahren auf die erfindungsgemäße Vorrichtung.

Weiterhin betrifft die Erfindung einen L-Band-Empfänger mit einer vorstehend beschriebenen erfindungsgemäßen Vorrichtung.

Weitere Vorteile, Merkmale und Einzelheiten ergeben sich aus der nachfolgenden Beschreibung, in der unter Bezug auf die Zeichnungen Ausführungsbeispiele im Einzelnen beschrieben sind.

Es zeigen:

Fig. 1 ein Modell für eine OFDM-Übertragung,
Fig. 2 einen schematisierten Ablaufplan für ein erfindungsgemäßes Verfahren, und
Fig. 3 einen schematisierten Aufbau einer erfindungsgemäßen Vorrichtung.

Zur weiteren Erläuterung der Erfindungsidee wird nachfolgend zunächst eine Simulation eines erfindungsgemäßen Verfahrens erläutert.

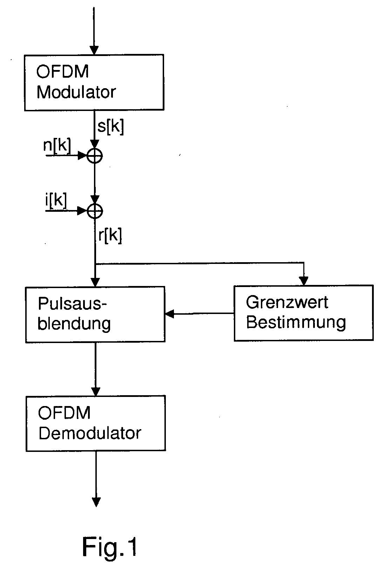

Hierzu wird ein zeitdiskretes Modell für eine konventionelle OFDM-Übertragung mit N = 1024 Unterträgern, wie in Fig. 1 dargestellt, zugrunde gelegt. Am Empfänger überlagern sich im Zeitbereich das eigentliche OFDM-Nutzsignal $s[k]$, $k = 0,1,...,$ N-1, additives weißes Gaußsches Rauschen $n[k]$, $k = 0,1,...,$ N-1, und eine impulsförmige Störung $i[k]$ = $b[k]$ *$g[k]$, $k = 0,1, ... ,$ N -1, wobei für ein vom Empfänger empfangenes OFDM Symbol r = $r[k]$ gilt: $r[k]$ = $s[k]$ + $n[k]$ + $i[k]$. Dabei beschreibt $b[k]$ einen Bernoulli Prozess, also einen Vektor von unabhängigen Nullen und Einsen, mit der Auftrittswahrscheinlichkeit von p für eine Eins. Die Werte von $g[k]$ sind durch einen mittelwertfreien, komplexwertigen Gaußprozess beschrieben. Bekanntermaßen sind Bernoulli-Gauß-Prozesse ein bekanntes Modell, um eine impulsförmige Störung darzustellen.

Die mittlere Leistung des OFDM-Nutzsignals beträgt PS, die mittlere Leistung des Gaußschen Rauschens beträgt PN. Die mittlere Leistung von $g[k]$ beträgt PG.

Für ein empfangenes OFDM Symbol $r[k]$, $k = 0,1, ... ,$ N-1 mit N =1024 Abtastwerten soll der Grenzwert $T_m$ bestimmt werden. Dazu wird als Maßzahl das Signal-zu-Interferenz- und-Rausch-Verhältnis SINR(engl. für "signal-to-noise-and-interference-ratio") nach einer Pulsausblendung für einen Unterträger, in Abhängigkeit eines Grenzwerts $T_n$ bestimmt.

Die Maximierung des SINR liefert den optimalen Grenzwert $T_m$, Das SINR berechnet sich mittels der Formel:

$$SINR = \frac{K^2 \cdot PS}{K^2 \cdot PN + K(1-K)(PS + PN) + PL}$$

PL ist hier die mittlere verbleibende Interferenzleistung auf einem Unterträger nach Pulsausblendung für einen bestimmten Grenzwert $T_n$. K ist definiert, als das Verhältnis von der Summe aus verbleibender OFDM Signalleistung PS und Rauschleistung PN nach Pulsausblendung, zur Summe aus OFDM Signalleistung PS und Rauschleistung PN vor Pulsausblendung, für einen bestimmten Grenzwert $T_n$.

Im Folgenden werden die Ermittlung von PL und die Bestimmung von K beschrieben.

Für die N Samples eines empfangenen OFDM Symbols $r[k]$ wird die Amplitudenverteilung $g(a)$ mit Amplitude a ermittelt. Abhängig vom jeweiligen Grenzwert $T_n$ kann nun die verbleibende Gesamtleistung $P_{wl}$ nach Pulsausblendung berechnet werden:

$$(6) \qquad P_{wl} = \int_0^{T_n} a^2 g(a)\, da \, .$$

Die Anzahl nicht ausgeblendeter Samples für den Grenzwert T liefert:

$$(7) \qquad N_{NB} = \int_0^{T_n} g(a)\,da\,.$$

Die Amplitudenverteilung für den interferenzfreien Fall beschreibt die bekannte Rayleigh-Verteilung:

$$(8) \qquad f(a) = N \frac{a}{\sigma^2} e^{\frac{a^2}{2\sigma^2}} \text{ mit } \sigma^2 = \frac{PS + PN}{2}\,.$$

Aus dieser Verteilung kann die verbleibende Leistung $P_{wol}$ der $N_{NB}$ Samples ermittelt werden, falls keine impulsförmige Interferenz aufgetreten wäre. Das Integral:

$$(9) \qquad \int_0^{T_n} a^2 f(a)\,da$$

liefert diese Leistung, jedoch nicht für $N_{NB}$ Samples, sondern für

$$(10) \qquad \int_0^{T_n} f(a)\,da$$

nicht ausgeblendete Samples. Daher muss diese Leistung mit dem Verhältnis der nicht ausgeblendeten Samples, mit und ohne Interferenz, skaliert werden. Das ergibt

$$(11) \qquad P_{wol} = \frac{N_{NB}}{\int_0^{T_n} f(a)\,da} \int_0^{T_n} a_2 f(a)\,da\,.$$

Durch Subtraktion von $P_{wol}$ von $P_{wl}$ ergibt sich nun die verbleibende Restinterferenzleistung nach Pulsausblendung. Da sich aufgrund der Gaußschen Verteilung der Werte von g[k] die impulsförmige Interferenz gleichmäßig auf alle N Unterträger verteilt, muss diese anschließend noch durch die Anzahl der Unterträger N dividiert werden um die mittlere verbleibende Restinterferenzleistung pro Unterträger zu erhalten:

$$(12) \qquad PL = \frac{P_{wl} - P_{wol}}{N}\,.$$

Zur Berechnung von K wird die Summe der verbleibenden OFDM Signalleistung und Rauschleistung nach Pulsausblendung benötigt. Diese ist $P_{wol}$. Des Weiteren wird die Summe der OFDM Signalleistung und der Rauschleistung vor Pulsausblendung benötigt. Hierzu muss die Summe der mittleren OFDM Signalleistung und Rauschleistung pro Sample, PS + PN, mit der Anzahl Samples multipliziert werden. Das Verhältnis dieser beiden Leistungen, K, ist folglich definiert durch:

$$(13) \qquad K = \frac{P_{wol}}{N \cdot (PS + PN)}\,.$$

Basierend auf diesen Schätzungen kann das SINR in Abhängigkeit vom Grenzwert $T_n$ bestimmt werden. Eine Maximierung liefert den optimalen Grenzwert $T_m$, welcher zur anschließenden Pulsausblendung verwendet wird, um das Signal y[k], k = 0,1, ..., N-1 zu erhalten.

Bis hierher wurde das Verfahren zur Bestimmung von $T_m$, für ein OFDM-Symbol beschrieben, es kann jedoch auf die Samples mehrerer OFDM Symbole ausgedehnt werden. Hierzu muss lediglich die Skalierung mit N in den angegebenen Formeln angepasst werden.

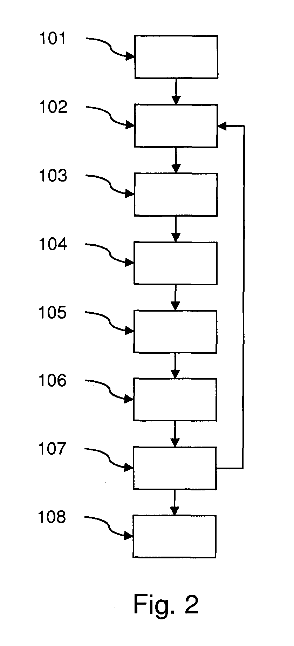

Fig. 2 zeigt einen schematisierten Ablaufplan für ein erfindungsgemäßes Verfahren zur Ausblendung einer impulsförmigen Interferenz bei einem von einem Empfänger empfangenen OFDM-Signal r gelöst. Das erfindungsgemäße Verfahren umfasst folgende Schritte. In einem ersten Schritt 101 erfolgt ein Vorgeben eines Grenzwertes $T_n$ mit n = 1. In einem zweiten Schritt 102 erfolgt ein Ausblenden von Signalanteilen der impulsförmigen Interferenz des OFDM-Signals r, deren Signalamplituden größer als der Grenzwert $T_n$ sind, wobei nach dem Ausblenden der Signalanteile das Signal $y(r,T_n)$ vorliegt:

$$(1) \qquad y(r,T_n) = \begin{cases} r, & |r| \le T_n \\ 0, & sonst \end{cases}$$

In einem dritten Schritt 103 erfolgt ein Ermitteln einer Restinterferenzleistung $PL(y(r,T_n))$ des Signals $y(r,T_n)$. In einem vierten Schritt 104 erfolgt ein Ermitteln einer Nutzsignalleistung $PS(y(r,T_n))$ des Signals $y(r,T_n)$. In einem fünften Schritt 105 erfolgt ein Ermitteln einer Rauschleistung $PN(y(r,T_n))$ des Signals $y(r,T_n)$. Der vierte Schritt 104 und der fünfte Schritt 105 kann in einer Ausführungsform auch durch die Ermittlung nur der Summe von $PS(y(r,T_n))$ und $PN(y(r,T_n))$ ersetzt werden. In einem sechsten Schritt 106 erfolgt ein Ermitteln eines Signal-zu-Interferenz-und-Rausch Verhältnisses $SINR(y(r,T_n))$:

$$(2) \qquad SINR(y(r,T_n)) = SINR(\, PL(y(r,T_n)), PS(y(r,T_n)), PN(y(r,T_n))) = SINR(T_n).$$

In einem siebten Schritt 107 erfolgt ein Ermitteln eines optimierten Grenzwertes $T_m$ zur Ausblendung der impulsförmigen Interferenz des OFDM-Signals r durch mehrmaliges Ausführen der Schritte zwei bis sechs, wobei das Signal-zu-Interferenz-und-Rausch Verhältnis $SINR(T_n)$ durch iteratives Variieren des Grenzwertes $T_n$ für n = 2, 3,..., m, global maximiert wird, so dass für $T_m$ gilt:

$$(3) \qquad SINR(y(r,T_m)) = SINR(T_m) = Max(SINR(y(r,T_n))) = Max(SINR(T_n)).$$

In einem achten Schritt 108 erfolgt ein Ausblenden der impulsförmigen Interferenz des OFDM-Signals r, deren Signalamplituden größer als der Grenzwert $T_m$ sind, wobei nach dem Ausblenden das Signal $y(r,T_m)$ vorliegt:

$$(4) \qquad y(r,T_m) = \begin{cases} r, & |r| \le T_m \\ 0, & sonst \end{cases}$$

Das Signal $y(r,T_m)$ wird anschließend demoduliert und weiterverarbeitet.

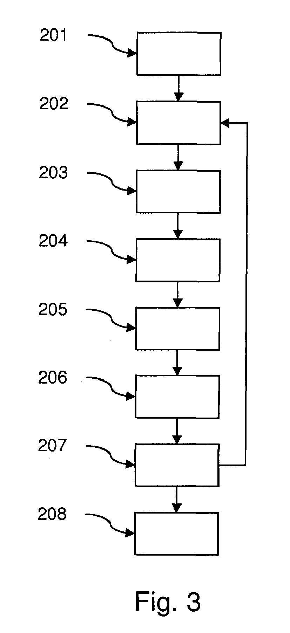

Fig. 3 zeigt einen schematisierten Aufbau einer erfindungsgemäßen Vorrichtung zur Ausblendung einer impulsförmigen Interferenz bei einem von einem Empfänger empfangenen OFDM-Signal r gelöst. Die erfindungsgemäße Vorrichtung umfasst ein erstes Mittel 201, mit dem ein Grenzwert $T_n$ mit n = 1 vorgegeben wird, ein zweites Mittel 202, mit dem Signalanteile der impulsförmigen Interferenz des Signals r ausgeblendet werden, deren Signalamplituden größer als der Grenzwert $T_n$ sind, wobei nach dem Ausblenden der Signalanteile das Signal $y(r,T_n)$ vorliegt:

$$(1) \qquad y(r,T_n) = \begin{cases} r, & |r| \le T_n \\ 0, & sonst \end{cases}$$

ein drittes Mittel 203, mit dem eine Restinterferenzleistung $PL(y(r,T_n))$ des Signals $y(r,T_n)$ ermittelt wird, ein viertes Mittel 204, mit dem eine Nutzsignalleistung $PS(y(r,T_n))$ des Signals $y(r,T_n)$ ermittelt wird, ein fünftes Mittel 205, mit dem eine Rauschleistung $PN(y(r,T_n))$ des Signals $y(r,T_n)$ ermittelt wird, ein sechstes Mittel 206, mit dem ein Signal-zu-Interferenz-und-Rausch Verhältnis $SINR(y(r,T_n))$:

$$(2) \qquad SINR(y(r,T_n)) = SINR(\ PL(y(r,T_n)),\ PS(y(r,T_n)),\ PN(y(r,T_n))) = SINR(T_n)$$

ermittelt wird, ein siebtes Mittel 207, mit dem ein optimierter Grenzwert $T_m$ zur Ausblendung der impulsförmigen Interferenz des OFDM-Signals r ermittelt wird, wobei das Signal-zu-Interferenz-und-Rausch Verhältnis $SINR(T_n)$ durch iteratives Variieren des Grenzwertes $T_n$ für n = 2, 3, ..., m maximiert wird, so dass für $T_m$ gilt:

$$(3) \qquad SINR(y(r,T_m)) = SINR(T_m) = Max(SINR(y(r,T_n))) = Max(SINR(T_n)),\ und$$

ein achtes Mittel, mit dem die impulsförmige Interferenz des OFDM-Signals r, deren Signalamplituden größer als der Grenzwert $T_m$ sind ausgeblendet wird, wobei nach dem Ausblenden das Signal $y(r,T_m)$ vorliegt:

$$(4) \qquad y(r,T_m) = \begin{cases} r, & |r| \le T_m \\ 0, & sonst \end{cases}.$$

Bezugszeichenliste

| 101-108 | Verfahrensschritte |
|---|---|
| 201 | erstes Mittel |
| 202 | zweites Mittel |
| 203 | drittes Mittel |
| 204 | viertes Mittel |
| 205 | fünftes Mittel |
| 206 | sechstes Mittel |
| 207 | siebtes Mittel |
| 208 | achtes Mittel |

**Patentansprüche**

1. Verfahren zur Ausblendung einer impulsförmigen Interferenz bei einem von einem Empfänger empfangenen OFDM-Signal r, mit folgenden Schritten:

    1.1. Vorgeben (101) eines Grenzwertes $T_n$ mit n = 1

    1.2. Ausblenden (102) von Signalanteilen der impulsförmigen Interferenz des OFDM-Signals r, deren Signalamplituden größer als der Grenzwert $T_n$ sind, wobei nach dem Ausblenden der Signalanteile das Signal $y(r,T_n)$ vorliegt:

$$(1) \qquad y(r,T_n) = \begin{cases} r, & |r| \le T_n \\ 0, & sonst \end{cases}$$

    1.3. Ermitteln (103) einer Restinterferenzleistung $PL(y(r,T_n))$ des Signals $y(r,T_n)$, wobei gilt: $PL(y(r,T_n)) = (P_{wl} - P_{wol})/N$, mit:

        $P_{wl}$: verbleibende Gesamtleistung nach Ausblendung von Signalanteilen der impulsförmigen Interferenz des OFDM-Signals r,
        $P_{wol}$: verbleibende Leistung nach Ausblendung von Signalanteilen falls keine impulsförmige Interferenz aufgetreten wäre skaliert mit einem Verhältnis von nicht ausgeblendeten Signalanteilen mit und ohne Interferenz, und
        N: Anzahl von Unterträgern des Signals $y(r,T_n)$,

1.4. Ermitteln (104) einer Nutzsignalleistung PS(y(r,T$_n$)) des Signals y(r,T$_n$);

1.5. Ermitteln (105) einer Rauschleistung PN(y(r,T$_n$)) des Signals y(r,T$_n$),

1.6. Ermitteln (106) eines Signal-zu-Interferenz-und-Rausch Verhältnisses. SINR(y(r,T$_n$)):

$$(2) \qquad SINR(y(r,T_n)) = SINR(\ PL(y(r,T_n)), PS(y(r,T_n)), PN(y(r,T_n))) = SINR(T_n)$$

1.7. Ermitteln (107) eines optimierten Grenzwertes T$_m$ zur Ausblendung der impulsförmigen Interferenz des OFDM-Signals r durch mehrmaliges Ausführen der Schritte 1.2. bis 1.6., wobei das Signal-zu-Interferenz-und-Rausch Verhältnis SINR(T$_n$) durch iteratives Variieren des Grenzwertes T$_n$ für n = 2, 3,..., m, maximiert wird, so dass für T$_m$ gilt:

$$(3) \qquad SINR(y(r,T_m)) = SINR(T_m) = Max(SINR(y(r,T_n)) = Max(SINR(T_n)), \text{ und}$$

1.8. Ausblenden (108) der impulsförmigen Interferenz des OFDM-Signals r, deren Signalamplituden größer als der Grenzwert T$_m$ sind, wobei nach dem Ausblenden das Signal y(r,T$_m$) vorliegt:

$$(4) \qquad y(r,T_m) = \begin{cases} r, & |r| \le T_m \\ 0, & sonst \end{cases}$$

2. Verfahren nach Anspruch 1,
   bei dem das Signal y(r,T$_m$) im Empfänger anschließend demoduliert und weiterverarbeitet wird.

3. Verfahren nach Anspruch 1 oder 2,
   bei dem SINR = SINR(y(r,T$_n$)) wie folgt definiert ist.

$$(5) \qquad SINR = \frac{K^2 \cdot PS}{K^2 \cdot PN + K(1-K)(PS + PN) + PL}$$

mit

SINR: Signal-zu-Interferenz-und-Rausch Verhältnis SINR(y(r,T$_n$)) des Signals y(r,T$_n$),

PL: Restinterferenzleistung PL(y(r,T$_n$)) des Signals y(r,T$_n$),

PS: Nutzsignalleistung PS(r) des ODM-Signals r,

PN: Rauschleistung PN(r) des OFDM-Signals r, und

K: Verhältnis der Summe aus der Nutzsignalleistung PS(y(r,T$_n$)) des Signals y(r,T$_n$)) und der Rauschleistung PN(y(r,T$_n$)) des Signals y(r,T$_n$)) zur Summe aus der Nutzsignalleistung PS(r) und der Rauschleistung PN(r).

4. Verfahren nach einem der Ansprüche 1 bis 3,
   bei dem die Schritte 1.1. bis 1.8. für eine vorgegebene Anzahl von OFDM-Symbolen automatisiert erneut ausgeführt werden.

5. Verwendung des Verfahrens gemäß den Ansprüchen 1 bis 4 zur Ausblendung einer impulsförmigen Interferenz bei der Kommunikation mit Luftfahrzeugen im L-Band.

6. Vorrichtung zur Ausblendung einer impulsförmigen Interferenz bei einem von einem Empfänger empfangenen OFDM-Signal r, umfassend

   6.1. ein erstes Mittel (201), mit dem ein Grenzwert T$_n$ mit n = 1 vorgegeben wird,

   6.2. ein zweites Mittel (202), mit dem Signalanteile der impulsförmigen Interferenz des Signals r ausgeblendet werden, deren Signalamplituden größer als der Grenzwert T$_n$ sind, wobei nach dem Ausblenden der Signalanteile das Signal y(r,T$_n$) vorliegt:

$$(6) \qquad y(r,T_n) = \begin{cases} r, & |r| \le T_n \\ 0, & sonst \end{cases}$$

6.3. ein drittes Mittel (203), mit dem eine Restinterferenzleistung $PL(y(r,T_n))$ des Signals $y(r,T_n)$ ermittelt wird, wobei gilt: $PL(y(r,T_n)) = (P_{wl} - P_{wol})/N$, mit:

$P_{wl}$: verbleibende Gesamtleistung nach Ausblendung von Signalanteilen der impulsförmigen Interferenz des OFDM-Signals r,
$P_{wol}$: verbleibende Leistung nach Ausblendung von Signalanteilen falls keine impulsförmige Interferenz aufgetreten wäre skaliert mit einem Verhältnis von nicht ausgeblendeten Signalanteilen mit und ohne Interferenz, und
N: Anzahl von Unterträgern des Signals $y(r,T_n)$,

6.4. ein viertes Mittel (204), mit dem eine Nutzsignalleistung $PS(y(r,T_n))$ des Signals $y(r,T_n)$ ermittelt wird,
6.5. ein fünftes Mittel (205), mit dem eine Rauschleistung $PN(y(r,T_n))$ des Signals $y(r,T_n)$ ermittelt wird,
6.6. ein sechstes Mittel (206), mit dem ein Signal-zu-Interferenz-und-Rausch Verhältnis $SINR(y(r,T_n))$:

$$(7) \qquad SINR(y(r,T_n)) = SINR(\, PL(y(r,T_n)), PS(y(r,T_n)), PN(y(r,T_n))) = SINR(T_n)$$

ermittelt wird,
6.7. ein siebtes Mittel (207), mit dem ein optimierter Grenzwert $T_m$ zur Ausblendung der impulsförmigen Interferenz des OFDM-Signals r ermittelt wird, wobei das Signal-zu-Interferenz-und-Rausch Verhältnis $SINR(T_n)$ durch iteratives Variieren des Grenzwertes $T_n$ für n = 2, 3, ..., m maximiert wird, so dass für $T_m$ gilt:

$$(8) \qquad SINR(y(r,T_m)) = SINR(T_m) = Max(SINR(y(r,Tn)) = Max(SINR(Tn)), \text{ und}$$

6.8. ein achtes Mittel (208), mit dem die impulsförmige Interferenz des OFDM-Signals r, deren Signalamplituden größer als der Grenzwert $T_m$ sind ausgeblendet wird, wobei nach dem Ausblenden das Signal $y(r,T_m)$ vorliegt:

$$(9) \qquad y(r,T_m) = \begin{cases} r, & |r| \le T_m \\ 0, & sonst \end{cases}$$

7. L-Band-Empfänger mit einer Vorrichtung gemäß Anspruch 6.

**Claims**

1. A method for suppressing impulsive interference in an OFDM signal r received by a receiver, comprising the steps of:

1.1 specifying (101) a threshold value $T_n$ with n = 1
1.2 suppressing (102) signal components of the impulsive interference of the OFDM signal r, the signal amplitudes of which are greater than the threshold value $T_n$, wherein the signal $y(r,T_n)$ is available after the suppression of the signal components:

$$y(r,T_n) = \begin{cases} r, & |r| \le T_n \\ 0, & \text{otherwise} \end{cases}$$
$$(1)$$

1.3 determining (103) a residual interference power $PL(y(r,T_n))$ of the signal $y(r,T_n)$, wherein $PL(y(r,T_n)) = (P_{wl} - P_{wol})/N$ applies, with

$P_{wl}$ representing the remaining overall power after the suppression of signal components of the impulsive interference of the OFDM signal r,

$P_{wol}$ representing the remaining power after the suppression of signal components if no impulsive interference would have occurred scaled with a ratio of non-suppressed signal components with and without interference, and

N representing the number of subcarriers of the signal $y(r,T_n)$,

1.4 determining (104) a useful signal power $PS(y(r,T_n)$ of the signal $y(r,T_n)$,

1.5 determining (105) a noise power $PN(y(r,T_n))$ of the signal $y(r,T_n)$,

1.6 determining (106) a signal-to-interference-and-noise ratio $SINR(y(r,T_n))$:

$$(2) \quad SINR(y(r,T_n)) = SINR(PL(y(r,T_n)), PS(y(r,T_n)), PN(y(r,T_n))) = SINR(T_n)$$

1.7 determining (107) an optimized threshold value $T_m$ for suppressing the impulsive interference of the OFDM signal r by carrying out steps 1.2 to 1.6 multiple times, wherein the signal-to-interference-and-noise ratio $SINR(T_n)$ is maximized by iteratively varying the threshold value for n = 2, 3,..., m such that the following applies to $T_m$:

$$(3) \quad SINR(y(r,T_m)) = SINR(T_m) = Max(SINR(y(r,T_n)) = Max(SINR(T_n)), \text{ and}$$

1.8 suppressing (108) the impulsive interference of the OFDM signal r, the signal amplitudes of which are greater than the threshold value Tm, wherein the signal $y(r,T_m)$ is available after the suppression:

$$y(r,T_m) = \begin{cases} r, & |r| \leq T_m \\ 0, & \text{otherwise} \end{cases}$$

$$(4)$$

2. The method according to claim 1, wherein the signal $y(r,T_m)$ is subsequently demodulated and additionally processed in the receiver.

3. The method according to claim 1 or 2, wherein SINR = $SINR(y(r,T_n))$ is defined as follows:

$$(5) \quad SINR = \frac{K^2 \cdot PS}{K^2 \cdot PN + K(1-K)(PS+PN) + PL},$$

with

SINR representing the signal-to-interference-and-noise ratio $SINR(y(r,T_n))$ of the signal $y(r,T_n)$,

PL representing the residual interference power $PL(y(r,T_n))$ of the signal $y(r,T_n)$,

PS representing the useful signal power PS (r) of the OFDM signal r, and

K representing the ratio of the sum of the useful signal power $PS(y(r,T_n))$ of the signal $y(r,T_n)$ and the noise power $PN(y(r,T_n))$ of the signal $y(r,T_n)$ to the sum of the useful signal power PS (r) and the noise power PN(r).

4. The method according to one of claims 1-3, wherein steps 1.1 to 1.8 are carried out anew for a specified number of OFDM symbols in an automated fashion.

5. The utilization of the method according to claims 1-4 for suppressing impulsive interference in the communication with aircraft in the L-band.

6. A device for suppressing impulsive interference in an OFDM signal r received by a receiver, comprising

6.1 a first means (21) that specifies a threshold value $T_n$ with n = 1,

6.2 a second means (202) that suppresses signal components of the impulsive interference of the signal r, the signal amplitudes of which are greater than the threshold value $T_n$, wherein the signal $y(r,T_n)$ is available after the suppression of the signal components:

$$y(r,T_n) = \begin{cases} r, & |r| \le T_n \\ 0, & \text{otherwise} \end{cases}$$

(6)

6.3 a third means (203) that determines a residual interference power $PL(y(r,T_n))$ of the signal $y(r,T_n)$, wherein $PL(y(r,T_n)) = (P_{wl} - P_{wol})/N$ applies, with

$P_{wl}$ representing the remaining overall power after the suppression of signal components of the impulsive interference of the OFDM signal r,

$P_{wol}$ representing the remaining power after the suppression of signal components if no impulsive interference would have occurred scaled with a ratio of non-suppressed signal components with and without interference, and

N representing the number of subcarriers of the signal $y(r,T_n)$,

6.4 a fourth means (204) that determines a useful signal power $PS(y(r,T_n))$ of the signal $y(r,T_n)$,
6.5 a fifth means (205) that determines a noise power $PN(y(r,T_n))$ of the signal $y(r,T_n)$,
6.6 a sixth means (206) that determines a signal-to-interference-and-noise ratio $SINR(y(r,T_n))$:

(7)  $SINR(y(r,T_n)) = SINR(PL(y(r,T_n)), PS(y(r,T_n)), PN(y(r,T_n))) = SINR(T_n)$

6.7 a seventh means (207) that determines an optimized threshold value $T_m$ for suppressing the impulsive interference of the OFDM signal r, wherein the signal-to-interference-and-noise ratio $SINR(T_n)$ is maximized by iteratively varying the threshold value for n = 2, 3,..., m such that the following applies to $T_m$:

(8)  $SINR(y(r,T_m)) = SINR(T_m) = Max(SINR(y(r,T_n)) = Max(SINR(T_n))$, and

6.8 an eighth means (208) that suppresses the impulsive interference of the OFDM signal r, the signal amplitudes of which are greater than the threshold value $T_m$, wherein the signal $y(r,T_m)$ is available after the suppression:

$$y(r,T_m) = \begin{cases} r, & |r| \le T_m \\ 0, & \text{otherwise} \end{cases}$$

(9)  .

7. An L-band receiver with a device according to claim 6.

**Revendications**

1. Méthode pour la suppression d'une interférence en forme d'impulsions pour un signal OFDM r (multiplexage orthogonal par division de fréquence) reçu par un récepteur avec les étapes suivantes :

1.1 Spécification (101) d'une valeur limite $T_n$ avec n = 1
1.2 Suppression (102) de parties de signal de l'interférence en forme d'impulsions du signal OFDM r dont les amplitudes de signal sont plus grandes que la valeur limite $T_n$, le signal $y(r,T_n)$ étant présent après la suppression des parties de signal :

$$y(r,T_n) = \begin{cases} r, & |r| \leq T_n \\ 0, & \text{sinon} \end{cases}$$

$(1)$

1.3 Détermination (103) d'une puissance d'interférence résiduelle $PL(y(r,T_n))$ du signal $y(r,T_n)$, pour laquelle :
$PL(y(r,T_n)) = (P_{wl}-P_{wol})/N$, avec :

$P_{wl}$ : puissance totale restante après suppression des parts de signal de l'interférence en forme d'impulsions du signal OFDM r,

$P_{wol}$ : puissance restante après suppression des parts de signal, au cas où aucune interférence en forme d'impulsions ne se serait produite, échelonnée avec un rapport de parts de signal non supprimées avec et sans interférence, et

N : nombre de sous-porteuses du signal $y(r,T_n)$,

1.4 détermination (104) d'une puissance de signal utile $PS(y(r,T_n))$ du signal $y(r,T_n)$,
1.5 détermination (105) d'une puissance de bruit $PN(y(r,T_n))$ du signal $y(r,T_n)$,
1.6 détermination (106) d'un rapport Signal/interférence-bruit $SINR(y(r,T_n))$ :

$(2)$  $SINR(y(r,T_n)) = SINR(PL(y(r,T_n)), PS(y(r,T_n)),$
$PN(y(r,T_n))) = SINR(T_n)$

1.7 détermination (107) d'une valeur limite optimisée $T_m$ pour supprimer l'interférence en forme d'impulsions du signal OFDM r par exécution répétée des étapes 1.2 à 1.6, le rapport Signal/Interférence-bruit $SINR(T_n)$ étant maximisé par variation itérative de la valeur limite $T_n$ pour n = 2, 3..., m, de sorte que pour $T_m$, on a :

$(3)$  $SINR(y(r,T_m)) = SINR(T_m) = Max(SINR(y(r,T_n)) =$
$Max(SINR(T_n))$ et,

1.8 suppression (108) de l'interférence en forme d'impulsions du signal OFDM r, dont les amplitudes de signal sont plus grandes que la valeur limite $T_m$, le signal $y(r,T_m)$ étant présent après la suppression :

$$y(r,T_m) = \begin{cases} r, & |r| \leq T_m \\ 0, & \text{sinon} \end{cases}$$

$(4)$

**2.** Méthode selon la revendication 1 pour laquelle le signal $y(r,T_m)$ est démodulé ensuite dans le récepteur et est ultérieurement traité.

**3.** Méthode selon la revendication 1 ou 2 pour laquelle le SINR = $SINR(y(r,T_n))$, est défini comme suit

$$SINR = \frac{K^2 \cdot PS}{K^2 \cdot PN + K(1-K)(PS+PN) + PL}$$

$(5)$

avec

SINR : Rapport Signal/interférence - bruit $SINR(y(r,T_n))$ du signal $y(r,T_n)$,
PL : Puissance d'interférence résiduelle $PL(y(r,T_n)$ du signal $y(r,T_n)$,
PS : Puissance de signal utile PS (r) du signal OFDM r,
PN : Puissance de bruit PN(r) du signal OFDM r, et
K : rapport entre la somme de la puissance de signal utile $PS(y(r,T_n))$ du signal $y(r,T_n)$ et de la puissance de bruit $PN(y(r,T_n))$ du signal $y(r,T_n)$) et la somme de la puissance de signal utile PS(r) et la puissance de bruit PN(r).

4. Méthode selon l'une quelconque des revendications 1 à 3 pour laquelle les étapes 1.1 à 1.8 sont exécutées à nouveau de façon automatisée pour un nombre prédéterminé de symboles OFDM.

5. Utilisation de la méthode selon les revendications 1 à 4 pour supprimer une interférence en forme d'impulsions lors de la communication avec des aéronefs en bande L.

6. Dispositif pour supprimer une interférence en forme d'impulsions pour un signal OFDM r reçu par un récepteur, comprenant

6.1 un premier moyen (201) avec lequel une valeur limite $T_n$ avec n = 1 est préalablement attribuée,
6.2 un deuxième moyen (202) avec lequel des parties de signal de l'interférence en forme d'impulsions du signal r sont supprimées, dont les amplitudes de signal sont plus grandes que la valeur limite $T_n$, le signal $y(r,T_n)$ étant présent après la suppression des parties de signal :

$$y(r,T_n) = \begin{cases} r, & |r| \leq T_n \\ 0, & \text{sinon} \end{cases}$$

(6)

6.3 un troisième moyen (203) avec lequel une puissance d'interférence résiduelle $PL(y(r,T_n))$ du signal $y(r,T_n)$ est déterminée, pour lequel on a $PL(y(r,T_n)) = (P_{wl} - P_{wol})/N$, avec :

$P_{wl}$ : puissance totale restante après suppression des parts de signal de l'interférence en forme d'impulsions du signal OFDM r,
$P_{wol}$ : puissance restante après suppression des parts de signal de l'interférence en forme d'impulsions du signal OFDM r, au cas où aucune interférence en forme d'impulsions ne se serait produite, échelonnée avec un rapport de parts de signal non supprimées avec et sans interférence, et
N : nombre de sous-porteuses du signal $y(r, T_n)$,

6.4 un quatrième moyen (204) avec lequel une puissance de signal utile $PS(y(r,T_n))$ du signal $y(r,T_n)$ est déterminée,
6.5 un cinquième moyen (205) avec lequel une puissance de bruit $PN(y(r,T_n))$ du signal $y(r,T_n)$ est déterminée,
6.6 un sixième moyen (206) avec lequel un rapport Signal/interférence-bruit $SINR(y(r,T_n))$ :

```
(7)  SINR(y(r,Tn))  =  SINR(PL(y(r,Tn)),  PS(y(r,Tn)),
     PN(y(r,Tn))) = SINR(Tn)
```

est déterminé.
6.7 un septième moyen (207) avec lequel une valeur limite $T_m$ optimisée pour supprimer l'interférence en forme d'impulsions du signal OFDM r est déterminée, le rapport Signal/interférence-bruit SINR(Tn) étant maximisé par variation itérative de la valeur limite $T_n$ pour n = 2, 3....,m, de sorte que pour $T_m$ on a :

```
(8)  SINR(y(r,Tm))  =  SINR(Tm)  =  Max(SINR(y(r,Tn))  =
     Max(SINR(Tn)), et
```

6.8 un huitième moyen (208) avec lequel l'interférence en forme d'impulsion du signal OFDM r, dont les amplitudes de signal sont plus grandes que la valeur limite $T_m$, est supprimée, le signal $y(r,T_m)$ étant présent après la suppression :

$$y(r,T_m) = \begin{cases} r, & |r| \leq T_m \\ 0, & \text{sinon} \end{cases}$$

(9)

7. Récepteur en bande L avec un dispositif selon la revendication 6.

OFDM
Modulator

s[k]

n[k]

i[k]

r[k]

Pulsausblendung

Grenzwert
Bestimmung

OFDM
Demodulator

Fig.1

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4479251 A
- US 5867539 A
- US 20110158360 A
- US 20050143109 A1
- US 20100246726 A1


**In der Beschreibung aufgeführte Nicht-Patentliteratur**

- **S. V. ZHIDKOV.** Performance Analysis and Optimization of OFDM-Receiver With Blanking Nonlinearity in Impulsive Noise Environment. *IEEE Transactions On Vehicular Technology,* Januar 2006, vol. 55 (1
- Compensation of the Impact of Interference Mitigation by Pulse Blanking in OFDM Systems. **BRANDES et al.** GLOBAL TELECOMMUNICATIONS in OFDM Systems. IEEE, 30. November 2009, 1-6
- On the analysis of OFOM receiver with blanking nonlinearity in impulsive noise channels. **ZH IOKOV S V.** INTELLIGENT SIGNAL PROCESSING ANO COMMUNICATION SYSTEMS, 2004. ISPACS 2004. PROCEEOINGS OF 2004 INTERNATIONAL SYMPOSIUM ON SEOUL. IEEE, 18. November 2004, 492-496
- Investigation of Blanking Nonlinearity in OFDM Systems. **ULRICH EPPLE et al.** ICC 2011 - 2011 IEEE INTERNATIONAL CONFERENCE ON COMMUNICATIONS - 5-9 JUNE 2011. IEEE, 05. Juni 2011, 1-5
- Iterative Interference Cancellation for OFDM Signals With Blanking Nonlinearity in Impulsive Noise Channels. **CHI-HSIAO YIH.** IEEE SIGNAL PROCESSING LETTERS. IEEE SERVICE CENTER, 01. Marz 2012, vol. 19, 147-150
- **K.S. AL-MAWALI.** Adaptive-Threshold Blanking for Impulse Noise Reduction in OFDM-Based Power Line Communications. *Proc. of the IASTED International Conference Signal and Image Processing (SIP 2009),* 17. August 2009